# EUROPÄISCHE PATENTANMELDUNG

(11) **EP 0 592 058 A1**
(43) Veröffentlichungstag der Anmeldung: **13.04.1994**
(21) Anmeldenummer: 93250241.2
(22) Anmeldetag: 08.09.1993
(51) Int. Cl.: C02F 3/30

(54) **Verfahren zur Optimierung der Stickstoffelimination bei Klärprozessen**

(30) Priorität: 05.10.1992 DE 4233829; 11.05.1993 DE 4316649
(71) Anmelder: MANNESMANN Aktiengesellschaft, D-40213 Düsseldorf (DE)
(72) Erfinder: Fabinski, Walter, D-65830 Kriftel (DE); Grundewald, Axel-Ulrich, D-60389 Frankfurt (DE); Hielscher, Bernd, D-61118 Bad Vilbel (DE); Wolff, Christian, D-61184 Karben (DE)
(74) Vertreter: Presting, Hans-Joachim, Dipl.-Ing.

(57) **Zusammenfassung**

Die Erfindung betrifft ein Verfahren zur Optimierung der Stickstoffelimination bei Klärprozessen, bei dem Schmutzwasser einer Denitrifizierung (DN) und anschließend unter Beimischung von rückgeführtem Wasser aus einer Schlammbehandlung einer Nitrifizierungsstufe (N) zugeführt wird und in einer Entnahmestelle ein Teilstrom des Ablaufwassers zur Denitrifizierungsstufe zurückgeführt wird, und über die Messung von TOC- und/oder TN-Gehalten der Gesamtprozeß geregelt wird. Um bei einem solchen Verfahren die Stickstoffelimination in einem geschlossenen Regelprozeß der Nitrifizierung (N) und der Denitrifizierung (DN) zu optimieren, ist erfindungsgemäß vorgeschlagen, daß an jeweils jeder Meßstelle (M1-M4) sowohl der TOC- als auch der TN-Gehalt gleichzeitig und kontinuierlich gemessen wird.

## Beschreibung

Die Erfindung bezieht sich auf ein Verfahren zur Optimierung der Stickstoffelimination bei Klärprozessen in Kläranlagen, bei denen der Abbau von Stickstoff in antropogen belasteten Abwässern im wesentlichen in zwei Schritten erfolgt.

Im Folgenden bedeutet
TOC (Total Organic Carbon) der gesamte im Abwasser vorhandene Kohlenstoff in organisch gebundener Form;
TN (Total Nitrogen) der gesamte im Abwasser vorhandene Stickstoff.

Der Abbau von Stickstoff in antropogen belasteten Abwässern erfolgt in Kläranlagen im wesentlichen in zwei Schritten:
- In einem ersten Schritt erfolgt die Oxidation von Ammoniumverbindungen zu Nitrat/Nitrit durch die Zugabe von Sauerstoff in das Abwasser; nachstehend mit Nitrifizierung bezeichnet
- In einem zweiten Schritt wird der Stickstoff, der als Nitrat oder Nitrit vorliegt, in einem anoxidischen biologischen Prozeß, unter Beteiligung von organisch gebundenem Kohlenstoff, in elementaren Stickstoff umgewandet; nachstehend mit Denitrifizierung bezeichnet.

In der Praxis wird der hier als zweiter Schritt bezeichnete Prozeß der Denitrifizierung dem ersten Schritt der Nitrifizierung vorgeschaltet. Zu diesem Zweck wird ein Teil des Ablaufs der Nitrifizierungsstufe der Denitrifizierungsstufe zurückgeführt. Die Denitrifizierung erfolgt in einem biochemischen Prozeß mit dem zurücrgeführten organischen Kohlenstoff unter anoxidischen Bedingungen.

Die Durchführung des Prozesses der Nitrifizierung und der Denitrifizierung in einem geschlossenen Regelkreis ist bisher nicht bekannt. Dies ist darauf zurückzuführen, das prozeßcharakteristische Parameter zur Regelung nur begrenzt als Online-Größen verfügbar sind und diese häufig mit nicht ausreichender Korrelation zu den tatsächlichen Verfahrensgrößen vorliegen. Zu diesen Größen zählen z. B. der chemische und der biologische Sauerstoffbedarf, kurz CSB- und BSB-Wert genannt. Bei Kläranlagen werden oftmals Führungsgrößen verwendet, die kein unmittelbares Maß für die Verschmutzung der Abwässer sind. Eine Pegelung der Sauerstoffkonzentration, wo nach ca. 3 mg/l am Auslauf der Nitrifikation angestrebt werden, führt in einigen Fällen zu übermäßigen Sauerstoffeintrag und damit zu unnötigen Energiekosten.

Aufgabe der Erfindung ist es, ein Verfahren zu möglichst vollständigem Abbau von Stickstoffverbindungen in Abwässern zu entwickeln, welches in einen geschlossenen Regelkreis den Prozeß der Nitrifizierung und der Denitrifizierung optimiert.

Sowohl die TOC-Gehalte als auch die TN-Gehalte zu messen und als Führungsgrößen in der Regelung von Kläranlagen zu nutzen und dadurch einen direkten Parameter für die Verschmutzung der Wässer zu integrieren ist das angestrebte erfindungsgemäße Ziel. Sowohl die TOC- als auch die TN-Gehalte in den Prozeßströmen der Kläranlage zu messen soll für eine Feed Forward-Regelung den wirklichen Sauerstoffbedarf ermitteln helfen und somit zu einer Optimierung der biologischen Prozesse in der Kläranlage beitragen. Somit ist eine Optimierung des Sauerstoffeintrages im Nitrifikationsprozeß durch Bestimmung der sauerstoffzehrenden Fracht TOC/TN gegeben. Eine Bestimmung des TOC im Rücklauf und von TOC/TN, daß heißt sowohl TOC als auch TN, in Rüclkbelastungsströmen aus der Schlammbehandlung ermöglicht eine Optimierung der Denitrifikation, die auf eine hohe Konzentration an sauerstoffzehrenden Substanzen angewiesen ist, um einen weitgehenden Abbau von Nitrat zu gewährleisten. Besonders vorteilhaft ist hierbei die Zeit und Kostenoptimierung des Betriebes von Nitri- und Denitrifikation.

Die Erfindung ist anhand der Zeichnung veranschaulicht und im nachfolgenden näher beschrieben.

Es zeigt:
Figur 1: erstes Ausführungsbeispiel
Figur 2: weiteres Ausführungsbeispiel

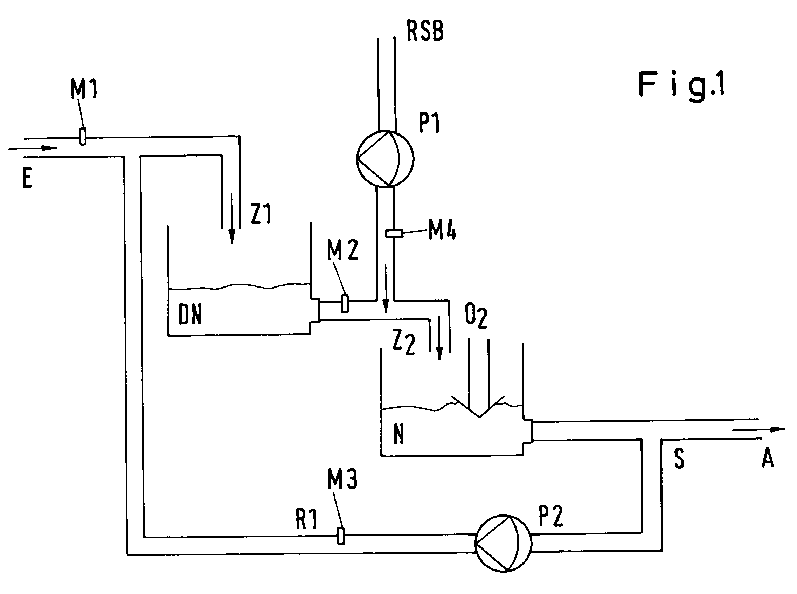

Figur 1 zeigt ein erstes Ausführungsbeispiel.
Die für eine Regelung der Biologie einer Kläranlage notwendigen Stellgrößen sind:
- Der Sauerstoffeintrag O₂ in die Nitrifikationszone N,
- das Volumenverhältnis von Nitrifikations- zu Denitrifikationszone gesteuert über Lüfter, die je nach Bedarf zugeschaltet werden können,
- das Rücklaufverhältnis gesteuert an der Pumpe P2 und
- der Rücklauf aus der Schlammbehandlung gesteuert an der Pumpe P1.

Ziel der Regelung ist es, über Zwischenspeicherbecken eine Vergleichmäßigung der anfallenden Konzentrationen zu erreichen, sowie ein möglichst gleichbleibend hohes Niveau an Schmutzfracht, die die Nährstoffe für die Biologie darstellt. Die Summe der Parameter TOC und TN im Einlauf zur Nitrifikation an Meßstelle M2 ist ein Maß für den Sauerstoffbedarf. Das gleiche gilt für die Meßstelle M4 an der TOC und TN für das Wasser aus dem Rücklauf der Schlammbehandlung ermittelt wird. Bei einer Berücksichtigung der TOC-Gehalte an Meßstelle M2 in Summe mit den TOC-Gehalten an Meßstelle M4 bedeutet, daß natürlich bei einer solchen Summenberücksichtigung auch die entsprechenden Volumenströme mitbertücksichtigt werden müssen. Gleiches gilt für die Summenberücksichtigung der TN-Gehalte an M2 und M4. Der TN-Wert aus Meßstelle M3 entspricht weitgehend der Nitratkonzentration im Auslauf der Kläranlage. Deren Abbau über die Rückführung zur Denitrifikation nur mit den entsprechenden TOC-Frachten vom Einlauf also Meßstelle M1 realisiert wird.

Entsprechend dem Gesamtanfall an TN aus dem Zulauf der Nitrifikation und der Rückführung aus der Schlammbehandlung RSB, also der Summe der TN-Werte von Meßstelle M2 und M4 der weitgehend einer Ammoniumkonzentration entspricht, wird auf das notwendige Verhältnis der Volumina der Nitrifikationszone zur Denitrifikationszone geschlossen. Der TOC-Eintrag in die Nitrifikation an Meßstelle M2 ist ein Kriterium für die Entscheidung ob und wieviel des Rücklaufwassers aus der Schlammbehandlung dosiert wird, um eine unnötige Verdünnung in den Stufen der Biologie zu vermeiden. Das Verhältnis vom TOC-Wert an Meßstelle M1 und dem TN-Wert an Meßstelle M3 gilt als Regelparameter für die Denitrifikation. Eine weitere Verbesserung der Regelung ist durch eine ergänzende Nitratmessung an Meßstelle M3 gegeben.

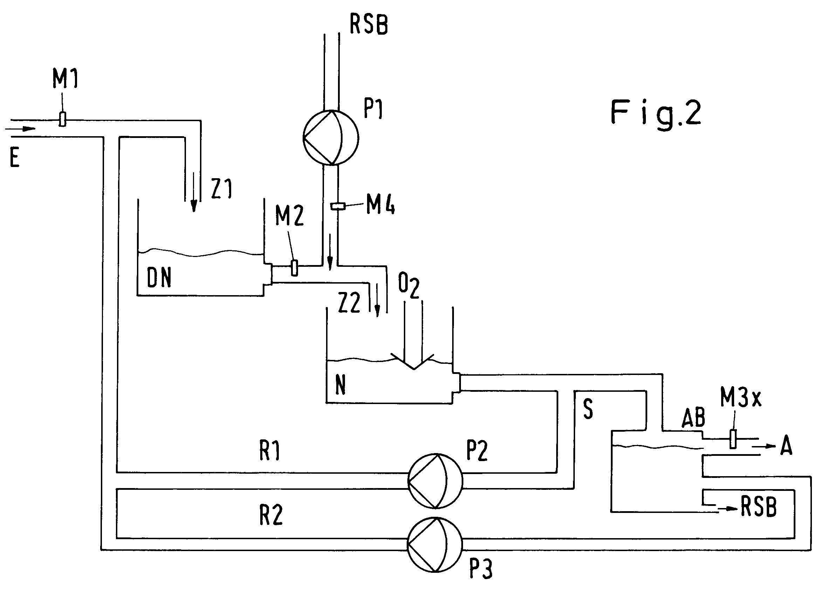

Figur 2 zeigt ein weiteres Ausführungsbeispiel einer der dargestellten Lösungsvarianten der Erfindung. Auch hierbei ist wieder ein Denitrifizierungs- und ein Nitrifizierungsbecken vorgesehen, wobei als dritte Behandlungsstufe noch das Absetzbecken AB dargestellt ist. Dieses Absetzbecken AB ist am Ausgang der Nitrifizierungsstufe N angeordnet. Die Meßstellen M1, M2 und M4 sind ebenso wie in Figur 1 angeordnet. Die Meßstelle M1 liegt am Einlauf E des Schmutzwassers, die Meßstelle M2 am Ausgang der Denitrifizierungsstufe DN, und die Meßstelle M4 im Bereich des Rücklaufes aus der Schlammbehandlung RSB. Unterschiedlich zu Figur 1 ist hier der Auslauf der Nitrifizierungsstufe N und die entsprechende Rückführung. In Figur 1 ist an einer Entnahmestelle S eine Rückführung des Nitrifizierungsablaufwassers zum Einlauf E des Gesamtprozesses. Hingegen ist in Figur 2 am Ausgang der Nitrifizierungsstufe N vorgesehen, ein Teilstrom als Zirkulationswasser zum Einlauf E zurückzuführen. Über diese Zirkulation wird die sogenannte Denitrifikationslast zurückgeführt zur Denitrifikationsstufe DN. Der übrige Teil des am Ausgang der Nitrifizierungsstufe N anliegenden Ablaufwassers wird einem Absetzbecken AB zugeführt. Am Grund dieses Absetzbeckens setzt sich Schlamm ab, welcher der Schlammbehandlung und anschließend dem Rücklauf aus der Schlammbehandlung RSB zugeführt wird. In mittlerer Höhe des Absetzbeckens AB enthält das Ablaufwasser der Nitrifizierungsstufe N Schwebstoffe. Diese Schwebstoffe enthalten die für den Klärprozeß wichtigen Bakterienkulturen die der Denitrifizierungsstufe DN zurückgeführt werden. Dies geschieht über den Rücklauf R2. Der Rücklauf R1 beinhaltet dagegen das sogenannte Zirkulationswasser. Über die Pumpe P3 ist die Menge des über den Rücklauf R2 geführten Wassers mitsamt Bakterienkulturen regelbar. In einer Höhe nahe der Oberfläche des Wasserspiegels im Absetzbecken befindet sich dann der Ablauf, wobei in dieser Ausgestaltung eine Meßstelle M3x vorgesehen ist, wobei auch an dieser Meßstelle sowohl der TOC als auch der TN-Gehalt gemessen wird. Ebenso wie in der Beschreibung zu Figur 1 sind hierbei Sauerstoffeintrag in die Nitrifikationsstufe, Volumenverhältnis von Nitri- und Denitrifikationszone sowie der entsprechend über die Pumpen P2 und P3 gesteuerte Rücklauf sowie der Rücklauf aus der Schlammbehandlung durch Pumpe P1 regelbar. Auch bei dieser Ausführung besteht das Wesen der Erfindung darin, daß in Klärprozessen sowohl TOC als auch TN-Gehalte Berücksichtigung in der Regelung der genannten Parameter Eingang finden.

In der Zeichnung sind folgende Kurzzeichen verwendet:
- O₂: = Sauerstoffeintrag
- A: = Auslauf
- E: = Einlauf
- S: = Entnahmestelle
- R1,2: = Rücklauf
- P1,2,3: = Pumpe
- RSB: = Rücklauf aus Schlammbehandlung
- Z1,2: = Zulauf
- N: = Nitrifikation
- DN: = Denitrifikation
- AB: = Absetzbecken
- M1,...4, M3x: = Meßstellen

## Patentansprüche

1. Verfahren zur Optimierung der Stickstoffelimination bei Klärprozessen, bei dem Schmutzwasser über einen Einlauf (E) einer Denitrifizierungsstufe (DN) und anschließend unter Beimischung von rückgeführtem Wasser aus einer Schlammbehandlung (RSB) einer Nitrifizierungsstufe (N) zugeführt wird, und an einer Entnahmestelle (S) ein Teilstrom des Ablaufwassers aus der Nitrifizierungsstufe (N) zur Denitrifizierungsstufe (DN) zurückgeführt wird, und an mehreren Meßstellen im Klärprozeß TOC und/oder TN-Gehalte gemessen werden, über welche Prozeßvariable wie Mengenverhältnisse, Wasserrücklaufmenge, Sauerstoffeintrag, und Rückführung des Teilstromes des Ablaufwassers (A) geregelt werden,
dadurch gekennzeichnet,
daß jeweils an jeder Meßstelle (M1 - M4) sowohl der TOC- als auch der TN-Gehalt gleichzeitig und kontinuierlich gemessen wird.

2. Verfahren zur Optimierung der Stickstoffelimination bei Klärprozessen, bei dem Schmutzwasser über einen Einlauf (E) einer Denitrifizierungsstufe (DN) und anschließend unter Beimischung von rückgeführtem Wasser aus einer Schlammbehandlung (RSB) einer Nitrifizierungsstufe (N) zugeführt wird, und an einer Entnahmestelle (S) ein Teilstrom des Ablaufwassers aus der Nitrifizierungsstufe (N) zur Denitrifizierungsstufe (DN) zurückgeführt wird, und an mehreren Meßstellen im Klärprozeß TOC und/oder TN-Gehalte gemessen werden, über welche Prozeßvariable wie Mengenverhältnisse, Wasserrücklaufmenge, Sauerstoffeintrag, und Rückführung des Teilstromes des Ablaufwassers (A) geregelt werden,
dadurch gekennzeichnet,
daß jeweils am Einlauf (E) des Schmutzwassers der TOC-und im rückgeführten Teilstrom des Ablaufwassers (A) der Nitrifizierungsstufe (N) der TN-Gehalt und allen übrigen Meßstellen sowohl der TOC- als auch der TN-Gehalt gleichzeitig und kontinuierlich gemessen werden.

3. Verfahren zur Optimierung der Stickstoffelimination bei Klärprozessen nach Anspruch 1 oder 2,
dadurch gekennzeichnet,
daß die Messungen an der Meßstelle (M1) am Einlauf (E) des Schmutzwassers, an der Meßstelle (M2) am Auslauf der Denitrifizierungsstufe (DN), an der Meßstelle (M4) im rückgeführten Wasser aus der Schlammbehandlung (RSB), und an der Meßstelle (M3) im rückgeführten Teilstrom des Ablaufwassers aus der Nitrifizierungsstufe (N) vorgenommen werden.

4. Verfahren zur Optimierung der Stickstoffelimination bei Klärprozessen, bei dem Schmutzwasser über einen Einlauf (E) einer Denitrifizierungsstufe (DN) und anschließend unter Beimischung von rückgeführtem Wasser aus einer Schlammbehandlung (RSB) einer Nitrifizierungsstufe (N) zugeführt wird, und ein Teilstrom des Ablaufwassers der Nitrifizierungsstufe (N) zum Einlauf (E) des Schmutzwassers direkt zugeführt wird und das übrige Ablaufwasser der Nitrifizierungsstufe (N) über ein Absetzbecken (AB) geführt wird, bei welchem in geeigneter Höhe Ablaufwasser abgeführt wird, in entsprechend geringerer Höhe noch mit Schwebstoffen versehenes Wasser dem Einlauf (E) des Schmutzwassers zurückgeführt, und die abgesunkenen Bestandteile der Schlammbehandlung zugeführt werden, und an mehreren Meßstellen im Klärprozeß TOC- und/oder TN-Gehalte gemessen werden, über welche der Klärprozeß geregelt wird,
dadurch gekennzeichnet,
daß jeweils an jeder Meßstelle (M1, M2, M3x, M4) sowohl der TOC-als auch der TN-Gehalt gleichzeitig und kontinuierlich gemessen wird.

5. Verfahren zur Optimierung der Stickstoffelimination bei Klärprozessen nach Anspruch 4,
dadurch gekennzeichnet,
daß die Messungen an der Meßstelle (M1) am Einlauf (E) des Schmutzwassers, an der Meßstelle (M2) am Auslauf der Denitrifizierungsstufe (DN), an der Meßstelle (M4) im rückgeführten Wasser aus der Schlammbehandlung und an der Meßstelle (M3X) im Ablauftwasser des Absetzbeckens (AB) vorgenommen werden.

6. Verfahren zur Optimierung der Stickstoffelimination bei Klärprozessen nach einem oder mehreren der vorhergehenden Ansprüche,
dadurch gekennzeichnet,
daß die gemessenen TOC- und TN-Werte als Führungsgrößen zur Regelung des Mengenverhältnisses von Denitrifizierungsstufe (DN) und Nitrifizierungsstufe (N) eingesetzt werden.

7. Verfahren zur Optimierung der Stickstoffelimination bei Klärprozessen nach einem oder mehreren der vorhergehenden Ansprüche 1 bis 5,
dadurch gekennzeichnet,
daß die Regelung des Klärprozesses als Feed-Forward-Regelung ausgelegt ist.

8. Verfahren zur Optimierung der Stickstoffelimination bei Klärprozessen nach einem oder mehreren der vorhergehenden Ansprüche,
dadurch gekennzeichnet,
daß die Menge des rückgeführten Teilstromes des Ablaufwassers der Nitrifizierungsstufe (N) geregelt wird.

9. Vorfahren zur Optimierung der Stickstoffelimination bei Klärprozessen nach einem oder mehreren der vorhergehenden Ansprüche,
dadurch gekennzeichnet,
daß die Rücklaufwassermenge aus der Schlammbehandlung (RSB) geregelt wird.

10. Verfahren zur Optimierung der Stickstoffelimination bei Klärprozessen nach einem oder mehreren der vorhergehenden Ansprüche,
dadurch gekennzeichnet,
daß der Sauerstoffeintrag in die Nitrifizierungsstufe geregelt wird.

11. Verfahren zur Optimierung der Stickstoffelimination bei Klärprozessen nach einem oder mehreren der vorhergehenden Ansprüche,
dadurch gekennzeichnet,
daß in der Rückführung des Teilstromes des Ablaufwassers der Nitrifizierungsstufe (N) zur Denitrifizierungsstufe (DN) an der Meßstelle (M3) eine selektive Nitratmessung erfolgt, die zur besseren Absicherung der Prozeßregelung als Führungsgröße in die Regelung eingespeist wird.
